# EUROPEAN PATENT APPLICATION

(11) **EP 1 967 693 A2**
(43) Date of publication of application: **10.09.2008**
(21) Application number: 08250741.9
(22) Date of filing: 05.03.2008
(51) Int. Cl.: F01D 5/00, F02K 3/06

(54) **Splitter fairing repair**

(30) Priority: 06.03.2007 US 714750
(71) Applicant: United Technologies Corporation, Hartford, CT 06101 (US)
(72) Inventor: Anderson, Derek W., Cromwell, CT 06416 (US); Zappone, Ronald N., Winter Haven, FL 33881 (US)
(74) Representative: Leckey, David Herbert

(57) **Abstract**

A defect in a splitter fairing (26) of a turbine engine (10) is repaired by removing a forward portion (30) of the splitter fairing (26) and salvaging the remaining original portion (54) of the splitter fairing (26). The forward portion (30) includes an inner flange (46) and outer surface that create a channel. A replacement ring (56) is provided and welded to the original portion (54). The replacement ring (56) has minimum dimensions equal to the maximum height and width of the removed forward portion (30). Material from the replacement ring (56) is then removed to obtain a profile with essentially the same profile for the inner flange, outer surface, and channel as the original dimensions of the splitter fairing (26) before the defect occurred.

## Description

### BACKGROUND OF THE INVENTION

The present invention relates to the repair of turbine engine components, and in particular but not exclusively to the repair of the front portion of a splitter fairing section located at the front of the low pressure compressor.

During operation of a turbine engine, the engine components can be damaged. Engine operating stresses frequently lead to fatigue cracks or similar defects in gas turbine engines parts. Repairs must be done to the defects caused during normal operation. One part that may require repair is the splitter fairing. The splitter fairing supports the first stage stators of the low pressure compressor. Particularly, the front hook section as an engagement groove for the airseal on the splitter fairing can become worn. The inner flange of the hook becomes damaged, and must be repaired so that the part can function as originally anticipated.

Traditional repair techniques, such as weld build up or plasma coating of the groove, are difficult to perform. Also, such repairs impose a debit to the structural capability, which will produce a repair with properties inferior to the original part. Currently, there is no known repair for the splitter fairing of an engine that assures the part will be restored to serviceable condition and airworthiness standards. The entire part is replaced. Replacement is done to assure part integrity. However, the cost associated with replacement is large. What is absent in the art is a repair that eliminates the need for total part replacement.

### BRIEF SUMMARY OF THE INVENTION

In one embodiment, a defect in a splitter fairing of a turbine engine is repaired. A forward portion of the splitter fairing, the forward portion comprising an inner flange and outer surface that create a channel, is removed. An original portion of the splitter fairing is salvaged. A replacement ring is welded to the original portion. Material from the replacement ring is removed to obtain a profile with essentially the same profile for the inner flange, outer surface, and channel as the original dimensions of the splitter fairing before the defect occurred.

In another embodiment, a defect in a generally cylindrical component turbine engine component is repaired. The component is removed from the engine, and a generally hook-shaped forward portion of the component is removed. A replacement ring having minimum dimensions equal to the maximum height and width of the removed forward portion is welded to the original portion. Material from the replacement ring is removed to obtain a new hook-shaped forward portion with essentially the same profile as the generally hook-shaped forward portion of the component prior to the defect.

### BRIEF DESCRIPTION OF THE DRAWINGS

FIG. 1 is a cross-sectional view of a gas turbine engine.
FIG. 2 is a perspective view of a splitter fairing of a turbine engine.
FIG. 3 is a cross-sectional view of the splitter fairing taken along line 3-3 illustrated in FIG. 2.
FIG. 4 is a perspective view of the splitter fairing with a front portion removed, along with a replacement ring.
FIG. 5 is a cross-sectional view of the remaining portion of the front splitter fairing joined to the replacement ring.
FIG. 6 is a cross-sectional view of the repaired portion of the splitter fairing ring.

### DETAILED DESCRIPTION

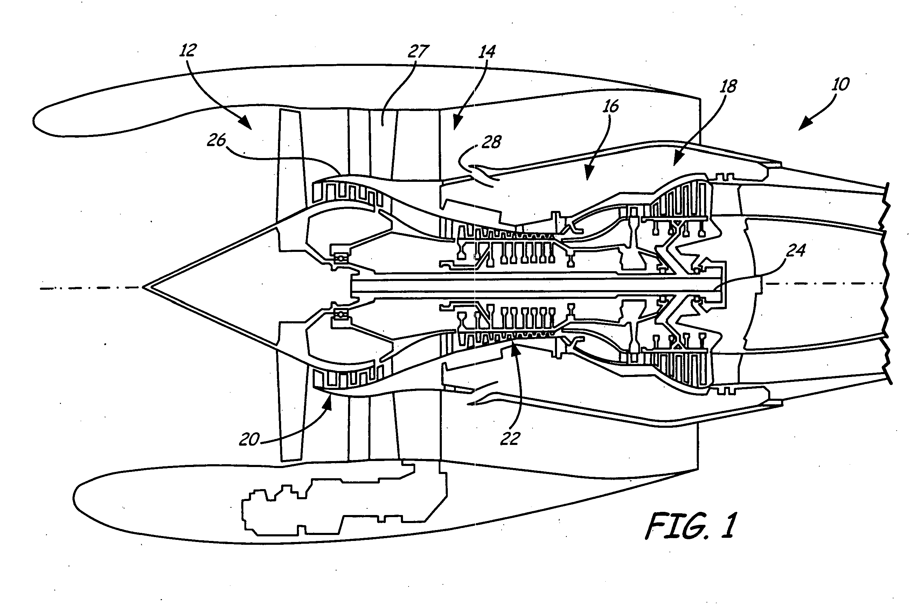

FIG. 1 is a cross-sectional view of a gas turbine engine 10. Engine 10 has an inlet fan 12, a compressor section 14, a combustion section 16, and a turbine section 18. Compressor section 14 has a low pressure compressor 20 and a high pressure compressor 22. Air is taken in through fan inlet 12 and a portion is directed to the compressor section 14. The air is then compressed by a series of rotating blades and static vanes in the compressor section. The compressed air is mixed with fuel, and then ignited in the combustion section 16. The combustion exhaust is then directed towards the turbine section 18, which is also comprised of blades and vanes. The blades extract kinetic energy from the exhaust to turn a shaft 24, which provides power output for the engine.

After air enters the fan inlet 12, splitter fairing 26 directs a portion to the low pressure compressor 20. The rest of the air flows through a bypass duct 27. The air from bypass duct 27 will be bled off through an opening 28 to be used for cooling the components of the high pressure compressor 22, combustion section 16, and turbine section 18.

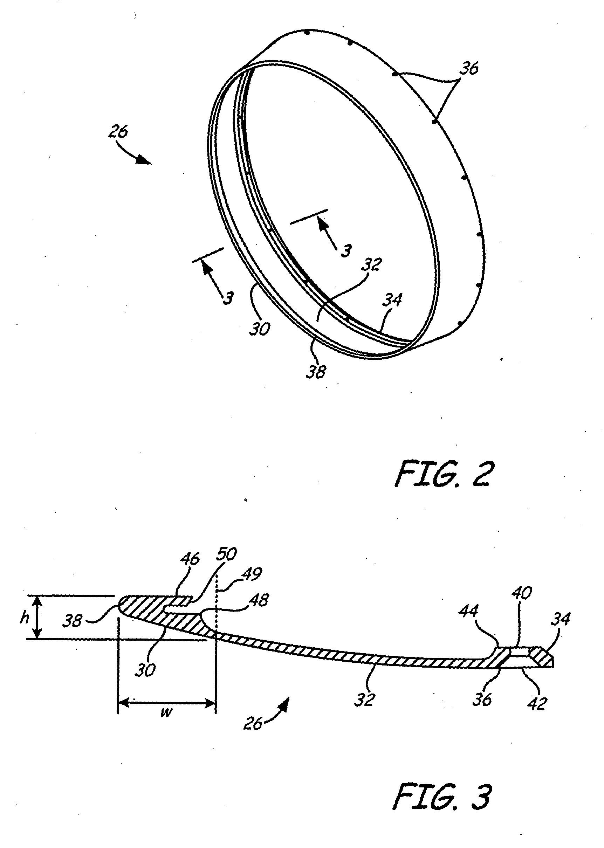

FIG. 2 is a perspective view of splitter fairing 26 of a turbine engine 10. Splitter fairing 26 is generally cylindrical or frustaconical in shape and includes a forward portion 30, a body 32, and an aft portion 34 containing several apertures 36. Splitter fairing 26 is typically constructed from aluminum or similar light weight metal, including AL 6061. Splitter fairing 26 is a forged component of turbine engine 10; forging assures structural strength for the part. Splitter fairing 26 operates in an environment of minimally enhanced temperatures, typically operating at just slightly above ambient temperature.

Forward portion 30 contains a front edge 38, which is used to direct the flow of fluids. Front edge 38 is forged in an acute angle, and may contain a rounded fillet to facilitate smooth air flow. Aft portion 34 is used to connect the splitter fairing 26 to the inner casing of the turbine engine 10. Apertures 36 are fastener holes for securing the splitter fairing 26 within the turbine engine 10.

FIG. 3 is a cross-sectional view of splitter fairing 26 taken along line 3-3 illustrated in FIG. 2. In this view, the aft portion 34 is illustrated as being thicker than the adjacent body 32. The additional thickness provides support for the apertures 36. Aperture 36 contains a hole 40 and a countersink 42. Countersink 42 allows for placing a fastener into the aperture 36 while keeping a flush surface along the splitter fairing 26. A smooth surface promotes fluid flow through the bypass duct 27. Aft portion 34 also contains an inner surface 44 perpendicular to the hole 40.

Forward portion 30 has a hook shape with an inner flange 46 and an outer edge 48. The space between the inner flange 46 and outer edge 48 is used to attach low pressure compressor components. Forward portion 30 has general dimensions of height h and width w. In the embodiment illustrated, an aft edge 50 of the inner flange 46 contains damage that must be remedied.

To initiate the repair, the splitting fairing 26 is removed from turbine engine 10. Forward portion 30 of the splitter fairing 26 is then removed along a line 49 by a process such as laser cutting or machining, or similar material removal methods known in the art. The cut is made along a line such as line 49. The angle of the cut is derived from the geometry of a replacement piece that will be attached to the remaining portion of splitter fairing 26.

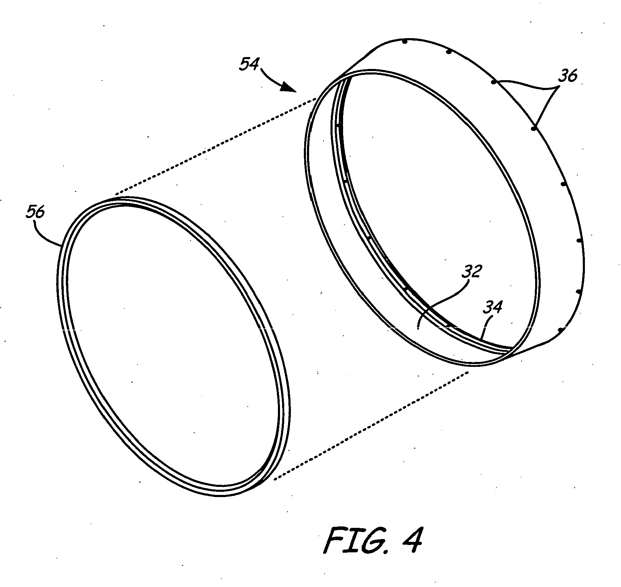

FIG. 4 is a perspective view of the splitter fairing 26 with the forward portion 30 removed, leaving an original portion 54, which contains the majority of body 32 and aft portion 34 with the apertures 36. Also illustrated is a replacement ring 56. Replacement ring 56 is constructed from the same or similar material as the original portion 54, such as AL 6061. Replacement ring may be a forged part.

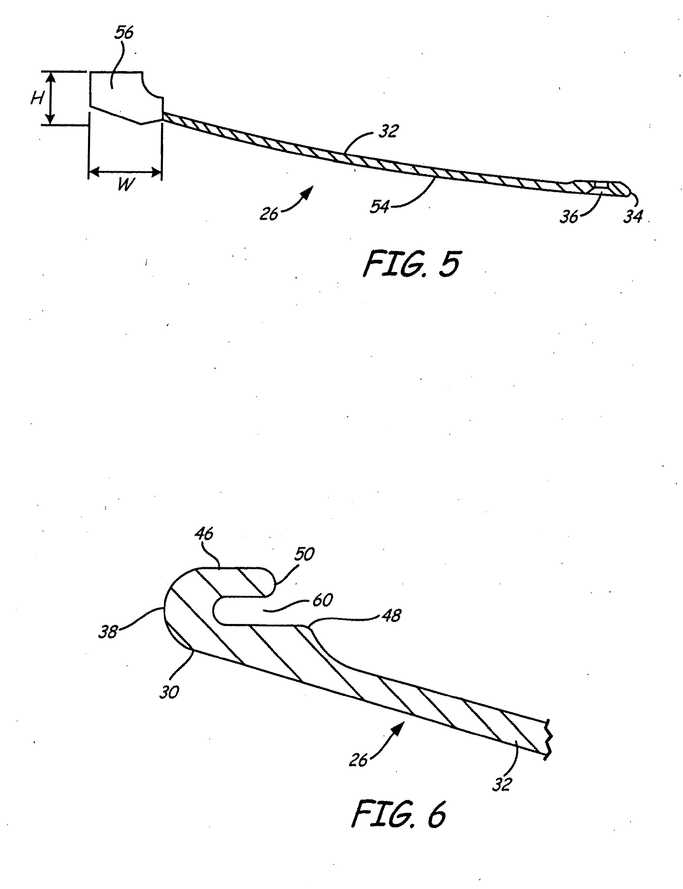

FIG. 5 is a cross-sectional view of the original portion 54 of splitter fairing 26 joined to replacement ring 56. Replacement ring 56 has a height H and width W, which are greater than the dimensions h and w of the original forward portion 30. Replacement ring 56 is welded to the original portion 54.

FIG. 6 is a cross-sectional view of a repaired forward portion 30 of the splitter fairing 26. Replacement ring 56 has been machined down to obtain the original dimensions for the forward portion 30, including the inner flange 46 and outer edge 48. The machining also creates a channel 60 which allows for the attachment of low pressure compressor components to the splitter fairing 26. Inner flange 46 contains a round fillet on aft edge 50, which promotes fluid flow past the surface.

To summarize the repair process, the splitter fairing 26 is removed from the turbine engine. The damage is located during regular maintenance and inspection of the engine. The damaged section forward section is removed by machining or a similar process. Measurements are taken and recorded for the average wall thickness, inner diameter, and overall axial height to cut-off. Material removal is kept to a minimum. The cut plane location illustrated in FIG. 3 is placed to accommodate a second section replacement, should one be necessary in the future.

Next, the fairing is cleaned and the surfaces are prepped for welding by machining the original portion to a bright metal condition. Measurements are taken and recorded for the average wall thickness, inner diameter, and overall axial height to cut-off.

A locally manufactured replacement ring is fabricated. The replacement ring is welded to the original portion by a welding process such electron beam (EB) welding, plasma arc welding (PAW), or gas tungsten arc welding (GTAW). If the EB procedure is to be performed, the locally fabricated replacement ring is machined ensuring a proper EB joint fit-up of 0.003 inch (0.076 mm) maximum gap. Similarly, if PAW procedure is to be performed, the replacement ring is fabricated to ensure a proper PAW joint fit. If GTAW is performed, additional filler material may be required.

The replacement ring is cleaned after machining, and nondestructive inspection, such as Fluorescent Penetrant Inspection (FPI) is performed on the replacement ring and original portion to assure no defects are present prior to welding. The weld is performed. After welding, a visual inspection of the weld joint is done to assess is any re-welding operations that must be performed. If re-welding is required, no more than 25% of the length of the weld should be redone. If more that 25% of the length required rewelding, the repair process should be started again.

A further inspection is done after the initial visual inspection. Known nondestructive inspection (NDI) techniques, such as flourescent penetrant inspection (FPI), eddy current inspection, ultrasonic inspection and x ray inspection, etc. can be used. After inspection, the part is stress-relieved if needed. Also, heat treatment may be applied to the completed part.

Next, the replacement ring and adjacent weld are machined to meet the original tolerances of the part. The machining assures incorporation of critical design features present in the original section of the part. The original hole and perpendicular edge can be used as datum points for determining the amount of material to remove. The attaching weld must be flush to 0.010 inch (0.254 mm) above adjacent parent material. The original surface treatment on the part is removed, and a new surface treatment is applied. The part is again cleaned. Finally, the part is measured to assure all dimensions are within tolerances. The part is then ultimately returned to the engine.

The current repair will not degrade the fatigue life of the part, and thus the life of the part is renewed with the forward section replacement. The fatigue life of the repaired part with the replacement ring and original section is substantially restored to that of the original part. The repair eliminates the need for replacement with a new part, which is more costly that utilizing the aforementioned repair.

Although the present invention has been described with reference to preferred embodiments, workers skilled in the art will recognize that changes may be made in form and detail without departing from the scope of the invention.

## Claims

1. A method of repairing a defect in a splitter fairing (26) of a turbine engine (10), the method comprising:
removing a forward portion (30) of the splitter fairing (26), the forward portion (30) comprising an inner flange (46) and outer surface that create a channel, wherein an original portion (54) of the splitter fairing (26) is salvaged;
welding a replacement ring (56) to the original portion (54), the replacement ring (56) having minimum dimensions equal to the maximum height and width of the removed forward portion (30);
removing material from the replacement ring (56) to obtain a profile with essentially the same profile for the inner flange, outer surface, and channel as the original specifications for the splitter fairing (26).

2. The method of claim 1 wherein the original portion (54) of the splitter fairing (26) contains a series of apertures (36) that are generally perpendicular to an outer surface of an aft portion (34) of the splitter fairing (26).

3. The method of claim 2 further comprising:
using the apertures (36) and adjacent outer surfaces as datum points for the machining process.

4. A method of repairing a defect in a generally cylindrical component (26) of a turbine engine (10), the component containing a generally hook-shaped forward portion (30), the method comprising:
removing the component (26) from the engine;
removing the forward portion (30) of the component (26), leaving an original portion (54) of the component intact;
welding a replacement ring (56) to the original portion (54), the replacement ring (56) having minimum dimensions equal to the maximum height and width of the removed forward portion (30);
removing material from the replacement ring (54) to obtain a new hook-shaped forward portion with essentially the same profile as the generally hook-shaped forward portion (30) as detailed by the original part specifications.

5. The method of any preceding claim wherein the replacement ring (56) contains similar metallurgical properties to the base material.

6. The method of any of claims 1 to 4 wherein the replacement ring (56) contains essentially the same metallurgical properties as the base material.

7. The method of any preceding claim wherein the welding process used is electron beam welding.

8. The method of any of claims 1 to 6 wherein the welding process used is plasma arc welding.

9. The method of any of claims 1 to 6 wherein the welding process used is gas tungsten arc welding

10. The method of any preceding claim further comprising:
inspecting the repair to assure the repair has essentially the same dimensions as the original component.

11. The method of any preceding claim wherein removing the forward portion (30) is done by machining.
